# FASCICULE DE BREVET EUROPEEN

(11) **EP 3 011 252 B1**
(45) Date de publication et mention de la délivrance du brevet: **30.01.2019**
(21) Numéro de dépôt: 14730170.9
(22) Date de dépôt: 16.06.2014
(51) Int. Cl.: F28F 9/02

(54) **ÉCHANGEUR DE CHALEUR, NOTAMMENT POUR LES BOUCLES OU CIRCUITS DE CLIMATISATION DES VÉHICULES**
WÄRMETAUSCHER, INSBESONDERE FÜR KRAFTFAHRZEUGKLIMAANLAGENKREISE ODER -SCHALTUNGEN
HEAT EXCHANGER, IN PARTICULAR FOR VEHICLE AIR CONDITIONING LOOPS OR CIRCUITS

(30) Priorité: 20.06.2013 FR 1355854
(43) Date de publication de la demande: 27.04.2016
(73) Titulaire: Valeo Systemes Thermiques, 78320 Le Mesnil-Saint-Denis (FR)
(72) Inventeur: DURBECQ, Gaël, F-51100 Reims (FR); CUILLIER, Jean-Baptiste, F-51220 Pouillon (FR)
(74) Mandataire: Metz, Gaëlle
(86) Numéro de dépôt international: PCT/EP2014/062558
(87) Numéro de publication internationale: WO 2014/202527

(56) Documents cités:
- EP-A2- 1 150 088
- DE-A1-102006 040 848
- DE-A1-102009 038 297
- FR-A1- 2 791 766
- FR-A1- 2 951 817
- FR-A1- 2 962 206
- FR-A1- 2 969 269
- FR-A1- 2 975 764
- FR-A1- 2 978 237
- JP-A- H10 238 992

## Description

La présente invention concerne un échangeur de chaleur, notamment pour les boucles ou circuits de climatisation des véhicules.

Quoique non exclusivement, les échangeurs thermiques concernés sont destinés à équiper des véhicules et correspondent, dans une application préférentielle, aux condenseurs prévus sur les boucles ou circuits de climatisation des véhicules. Cependant, d'autres applications de ces échangeurs thermiques sont également envisageables sans sortir du cadre de l'invention.

Généralement, un échangeur de chaleur pour une telle boucle thermique comprend un faisceau de tubes parallèles et deux collecteurs dans lesquels sont raccordées, de façon fixe et étanche, les extrémités correspondantes des tubes. Ainsi, le fluide frigorigène circulant dans la boucle, peut circuler du collecteur amont tourné vers un compresseur, vers un collecteur aval, à travers les tubes faisant passer le fluide de la phase vapeur à la phase liquide par un flux d'air forcé externe, balayant les tubes dont la surface, augmentée par l'ajout de perturbateurs ou intercalaires entre les tubes, optimise l'échange thermique.

Dans le cas qui nous préoccupe ici, les échangeurs sont du type obtenu par brasage et les collecteurs utilisés alors peuvent être conçus en deux parties, et sont désignés par l'expression « collecteur ou boîte collectrice bipartite ».

Ce type de collecteur, dont la forme est globalement tubulaire, comporte :
- une plaque collectrice à paroi ouverte longitudinalement et pourvue de fentes destinées aux extrémités correspondantes des tubes parallèles de circulation du fluide ; et
- un couvercle fermant, après assemblage, l'ouverture longitudinale de la plaque collectrice et dans la paroi duquel est prévu au moins un orifice d'entrée et/ou de sortie du fluide.

Aussi, pour assurer la liaison entre chaque collecteur et une conduite de la boucle considérée, une bride de raccordement est rapportée sur le collecteur. Dans certaines configurations, notamment dans certains compartiments de moteur de véhicule particulièrement chargés, l'implantation d'une telle bride rapportée au collecteur est difficile, voire non envisageable. Il a ainsi déjà été proposé de monter sur le collecteur des tubulures permettant de déporter la bride de l'échangeur. Les solutions déjà proposées pour assembler de telles tubulures au collecteur avant brasage ne sont toutefois pas entièrement satisfaisantes, en particulier dans le cas de collecteurs bipartites.

La présente invention a pour but de remédier à cet inconvénient.

A cet effet, l'échangeur de chaleur selon l'invention comprend au moins une tubulure de passage de fluide et au moins un collecteur muni d'un couvercle fermant, après assemblage, une ouverture longitudinale d'une plaque collectrice coopérant avec ledit couvercle pour former le collecteur.

Selon l'invention, ladite tubulure est destinée à former un élément de raccordement de l'échangeur et comporte une extrémité en partie sertie entre ledit couvercle et ladite plaque collectrice au niveau d'un orifice de passage dudit fluide dans le collecteur.

On peut de la sorte réaliser un pré assemblage simple et fiable de la tubulure et de l'échangeur, avant brasage. Ladite tubulure est rapportée sur ledit échangeur, ce qui permet de réaliser le raccordement de l'échangeur en déport du collecteur.

Ladite plaque collectrice est configurée pour réaliser le sertissage de bords externes de ladite tubulure sur ledit couvercle en la mettant en communication de fluide avec ledit orifice de passage.

Ladite tubulure comprend une collerette conformée pour s'appliquer face contre face, au moins par une partie de ladite collerette sur le couvercle, ladite collerette comprenant lesdits bords externes.

Ladite collerette est rapportée à une pièce tubulaire formant un corps principal de la tubulure.

Selon d'autres caractéristiques de l'invention qui pourront être prises seules ou en combinaison :
- ladite tubulure est pourvue à l'autre de ses extrémités d'un élément de raccord pour le raccordement de l'échangeur,
- le sertissage de ladite tubulure sur ledit couvercle est réalisé par application de bords parallèles délimitant l'ouverture longitudinale de la plaque collectrice contre lesdits bords externes de la tubulure,
- lesdits bords externes sont issus d'une déformation, notamment régulière de l'extrémité de la tubulure,
- lesdits bords externes sont complémentaires du couvercle,
- ladite collerette et/ou lesdits bords externes sont pliés, la collerette peut être clinchée, sertie, déformée à chaud ou à froid sur le corps principal,
- ladite collerette et/ou lesdits bords externes comprennent une simple ou une double épaisseur, à savoir repliée sur elle-même dans le dernier cas,
- l'épaisseur de ladite collerette ou desdits bords externes correspond sensiblement à celle du couvercle, par exemple comprise entre 0,8 et 1,2 mm,
- le couvercle comporte un collet délimitant ledit orifice de passage, destiné à être reçu par ladite extrémité de la tubulure,
- ledit collet a une épaisseur de paroi réduite par rapport à celle dudit couvercle dont le collet est issu, de manière à maximiser la section dudit orifice de circulation de fluide en direction et/ou depuis le passage interne de ladite tubulure et limiter les pertes de charge interne de passage du fluide,
- ladite extrémité de la tubulure est évasée, notamment pour recevoir ledit collet,
- ladite plaque collectrice est pourvue de fentes destinées à des tubes parallèles de circulation de fluide,
- la paroi de la plaque collectrice est munie de butées internes configurées pour recevoir les bords longitudinaux dudit couvercle et permettre une mise en place appropriée de pré assemblage du couvercle sur la plaque collectrice,
- la section transversale de ladite plaque collectrice est sensiblement en forme de U dans l'ouverture duquel s'engage ledit couvercle, également de section transversale sensiblement en forme de U,
- ladite plaque collectrice et ledit couvercle sont montés tête-bêche,
- la face extérieure de la paroi dudit couvercle est revêtue d'un placage destiné au brasage d'assemblage ultérieur dudit couvercle avec ladite plaque collectrice et ladite tubulure.

Selon un aspect de l'invention, ledit échangeur de chaleur comprend deux collecteurs reliés entre eux par un faisceau de tubes parallèles pour la circulation dudit fluide. Au moins l'un desdits collecteurs, voire les deux, sont tels que définis ci-dessus.

L'invention concerne aussi un procédé d'assemblage d'un échangeur de chaleur comprenant les étapes consistant à :
- conformer la tubulure de raccordement de façon complémentaire à la surface externe du couvercle au niveau de l'orifice de passage du fluide dans le collecteur,
- positionner la tubulure sur l'orifice de passage de fluide du couvercle, puis
- rabattre les ailes latérales de la plaque collectrice sur le couvercle pour fermer le couvercle sur la plaque collectrice et sertir la tubulure au couvercle, en permettant de la sorte un pré assemblage de l'échangeur avant son assemblage, par exemple par brasage ou induction.

D'autres caractéristiques et avantages de l'invention apparaîtront à la lecture de la description qui suit d'exemples de réalisation donnés à titre illustratif en référence aux figures annexées. Sur ces figures :
- la figure 1 est une vue en coupe longitudinale partielle d'un échangeur de chaleur selon un mode de réalisation de l'invention;
- la figure 2 est une vue en coupe selon la ligne A-A du collecteur et de la tubulure de l'échangeur de chaleur de la figure 1 ;
- la figure 3 est une vue de dessus de l'échangeur de chaleur de la figure 1 ;
- les figures 4 à 6 sont des vues de demi coupes analogues à celle de la figure 2 de variantes de réalisation ;
- la figure 7 est une vue en coupe transversale de la tubulure de la figure 2 ; et
- la figure 8 est une vue partielle en coupe transversale de la tubulure selon une variante de réalisation.

Il faut noter que les figures exposent l'invention de manière détaillée et qu'elles peuvent, bien entendu, servir à mieux définir l'invention le cas échéant.

Enfin, des références numériques identiques sont utilisées pour désigner des éléments identiques ou analogues.

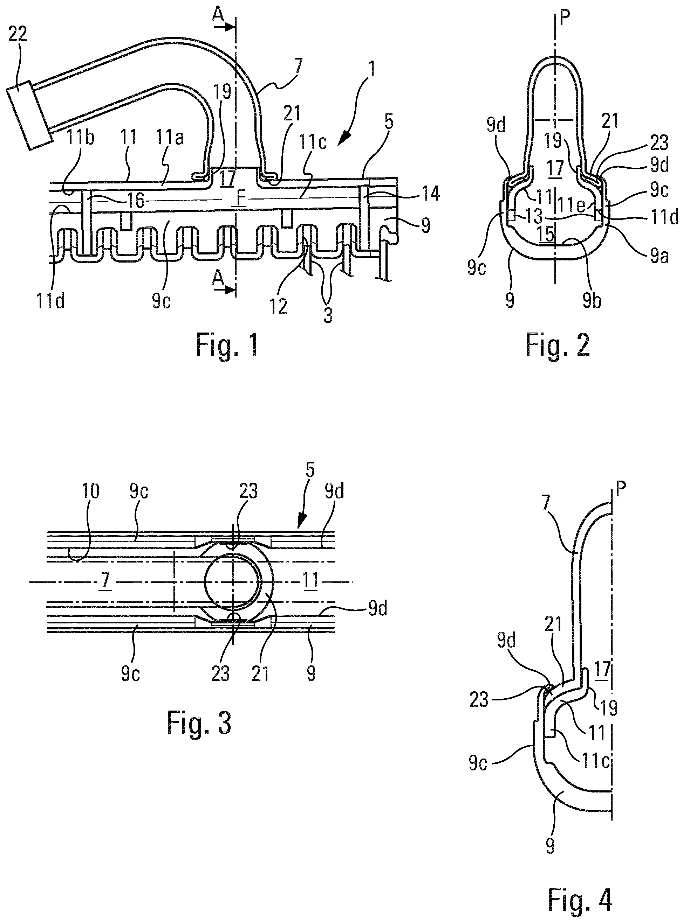

Comme illustré aux figures 1 à 4, l'invention concerne un échangeur de chaleur 1 qui peut être, par exemple, le condenseur d'une boucle de climatisation de l'habitacle d'un véhicule.

Structurellement, l'échangeur 1 comprend un faisceau de tubes parallèles 3 illustrés de façon partielle et schématique, dont les extrémités sont reliées, de manière fixe et étanche, à des collecteurs ou boîtes collectrices 5 de l'échangeur, respectivement, amont et aval selon le sens de circulation du fluide F circulant dans la boucle considérée. Un seul desdits collecteurs 5 est représenté figure 1. Ledit échangeur comprend en outre une ou des tubulures 7 de raccordement de fluide, par exemple pour l'entrée et la sortie du fluide de l'échangeur.

En particulier, les tubes 3 dans lesquels circule le fluide F ont une section transversale oblongue et entre ceux-ci sont agencés des intercalaires non représentés augmentant la surface d'échange thermique entre le fluide circulant dans l'échangeur et le flux d'air extérieur traversant celui-ci. L'intérieur des tubes peut aussi inclure des perturbateurs qui, à l'instar des intercalaires, augmentent la surface d'échange thermique et également la tenue mécanique des tubes. Il pourra aussi s'agir de tubes extrudés. Chaque tube définit, par exemple, une pluralité de canaux internes, parallèles, de circulation de fluide.

Les collecteurs amont et aval 5 peuvent être globalement identiques et ont une forme générale tubulaire. Ils sont de type « bipartite », c'est-à-dire que chacun d'eux se compose d'une plaque collectrice 9 et d'un couvercle 11 de fermeture.

Comme on peut le voir sur la figure 2, la plaque collectrice 9 a sensiblement une section transversale en U arrondi et sa paroi 9a définit ainsi un fond 9b prolongé de deux branches ou ailes latérales 9c, parallèles dont les bords d'extrémité 9d délimitent une ouverture longitudinale 10 obturée par le couvercle 11. Dans le fond 9b de la plaque collectrice sont ménagées des fentes oblongues 12 tout du long de celui-ci, dans lesquelles sont reçues les extrémités correspondantes des tubes parallèles 3.

Le couvercle 11 présente, lui aussi, une section transversale sensiblement en U dont la paroi 11a forme un fond 11b légèrement concave prolongé par des branches ou ailes latérales 11c, parallèles plus courtes que celles 9c de la plaque collectrice. La dimension, notamment en largeur du couvercle 11, est telle que les branches latérales 11c s'ajustent tête-bêche entre les branches latérales 9c de la plaque collectrice. Les bords d'extrémité 11d des branches latérales du couvercle peuvent s'appliquer contre des butées saillantes 13 prévues à l'intérieur de la plaque collectrice.

Le collecteur 5 présente ici un plan médian P de symétrie.

L'assemblage du couvercle 11 et de la plaque collectrice 9 définit un espace interne 15 de collecteur dans lequel est amené à circuler le fluide F de la boucle. La section transversale du collecteur 5 est donc approximativement rectangulaire de par la forme emboîtée des U de la plaque 9 et du couvercle 11, mais pourrait être différente. Des cloisons d'extrémité, dont une seule 14 est représentée, sont prévues à chacune des extrémités longitudinales du collecteur pour fermer le collecteur. Des cloisons internes 16 pourront être utilisées pour faire circuler le fluide en plusieurs passes successives dans le faisceau.

Le fond 11b du couvercle est mis en communication de fluide avec un orifice 17, ici issu d'un collet 19 du couvercle, qui délimite le passage du fluide du collecteur à la tubulure ou inversement. Le collet 19 est prévu au niveau du fond 11b du couvercle, par exemple de façon centrée.

Les figures montrent le raccordement d'une seule tubulure de l'échangeur 1, mais il va de soi qu'il pourrait s'en trouver deux à plusieurs. Notamment dans le cas de collecteurs à cloisons de séparation internes 16, il pourraient se trouver deux tubulures sur le même collecteur tubulaire, respectivement, aux extrémités de celui-ci, en entrée et sortie du fluide.

Ainsi, l'échangeur de chaleur 1 comprend au moins une tubulure 7 de passage de fluide F et au moins un collecteur 5 muni d'un couvercle 11 fermant, après assemblage, l'ouverture longitudinale 10 de la plaque collectrice 9 coopérant avec ledit couvercle 11 pour former le collecteur 5.

Selon l'invention, ladite tubulure 7 est destinée à former un élément de raccordement de l'échangeur, notamment dans ladite boucle de climatisation. Pour permettre le pré assemblage de la tubulure au reste de l'échangeur, avant brasage, ladite tubulure comprend une extrémité en partie sertie entre ledit couvercle 11 et ladite plaque collectrice 9 au niveau de l'orifice 17 de passage dudit fluide dans le collecteur 5.

Autrement dit, ladite tubulure 7 est rapportée sur ledit échangeur, ce qui permet de réaliser le raccordement de l'échangeur en déport du collecteur, par exemple par une bride de raccordement 22, à l'autre extrémité de la tubulure. En variante, ladite tubulure pourra être reliée à une bouteille ou réservoir pour ledit fluide.

Ladite plaque collectrice 9 est configurée pour réaliser, plus précisément par rabattement de ses ailes latérales 9c sur des bords externes 23 de ladite tubulure, le sertissage de cette dernière sur ledit couvercle 11 en la mettant en communication de fluide avec ledit orifice de passage 17 du couvercle.

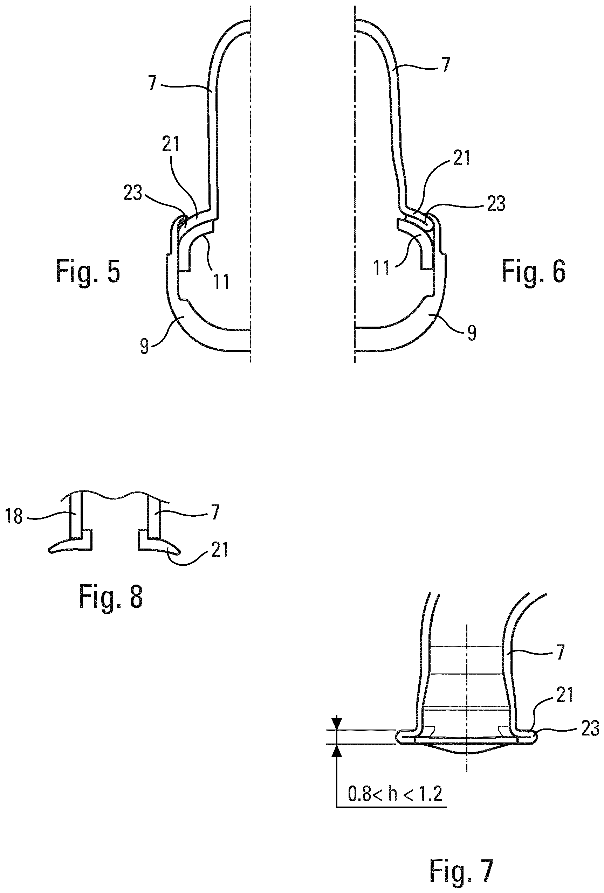

Lesdits bords externes 23 sont, par exemple, issus d'une déformation, notamment régulière du bord d'ouverture de la tubulure. Cette déformation peut résulter d'un formage du bord, tel qu'un étirement périphérique du bord par roulage. Cette déformation pourra amoindrir l'épaisseur du bord, en sorte qu'il soit utile de le plier, notamment en deux plis appliqués l'un sur l'autre, pour augmenter l'épaisseur de jonction du bord avec le couvercle et ainsi que la rigidité mécanique de la liaison desdits bords au couvercle soit suffisante, notamment homogène aux autres parties de l'échangeur. En particulier, l'épaisseur desdits bords externes 23, comme illustré à la figure 7, correspond sensiblement à celle de la paroi 11a de couvercle. Elle est, par exemple comprise entre 0,8 et 1,2 mm.

Ladite tubulure pourra comprendre une collerette 21 conformée pour s'appliquer, au moins par une partie de la collerette, à plat sur le couvercle 11. La surface de contact de ladite collerette avec le couvercle, dans son positionnement au niveau de l'orifice 17 de passage du fluide, peut être bombée, de façon complémentaire à la surface externe correspondante du couvercle. Ladite collerette 21 est ici à double épaisseur, avec un pli rabattu, comme cela est bien visible à la figure 2, mais elle pourrait être à simple épaisseur comme représenté à la figure 4. Elle est ici issue de matière.

Ladite collerette 21 pourra également être fixée rapportée à une pièce tubulaire 18 formant le corps principal de la tubulure 7, comme représenté à la figure 8, notamment au niveau de son extrémité. La collerette peut être clinchée, sertie, déformée à chaud ou à froid sur le corps principal 18 de la tubulure.

Dans ces différents modes de réalisation, lesdits bords externes 23 sont situés au niveau de ladite collerette 21, sur une portion angulaire de celle-ci.

Le couvercle 11 comporte ici, ainsi que précité, un collet 19 délimitant ledit orifice de passage 17, destiné à être reçu par ladite ouverture d'extrémité de la tubulure, mais un tel collet peut être supprimé comme représenté aux figures 5 et 6. Ladite collerette 21 de la tubulure est alors appliquée directement sur le couvercle autour de l'orifice de passage 17 du couvercle.

Ladite extrémité de la tubulure peut être évasée, comme dans l'exemple de la figure 1, pour être montée autour du collet 19.

Lesdits bords externes 23 sont ici les parties arrondies opposées de la collerette 21 les plus éloignées du plan médian P du collecteur. Lesdits bords externes pourraient également être de surface étendue, par exemple en forme d'oreille offrant plus de surface pour la prise de sertissage entre la plaque collectrice 9 et le couvercle 11.

Ledit collet 19 a ici une épaisseur de paroi réduite par rapport à celle dudit couvercle 11, de manière à maximiser la section dudit orifice 17 de circulation de fluide et limiter les pertes de charge interne de passage du fluide.

Comme déjà mentionné, pour obtenir une mise en place appropriée de pré assemblage du couvercle 11 sur la plaque collectrice 9, la paroi 9a de cette dernière est ici munie de butées internes 13 configurées pour recevoir les bords longitudinaux 11d dudit couvercle.

La face extérieure de la paroi 11a dudit couvercle est revêtue d'un placage de matière destiné au brasage d'assemblage ultérieur dudit couvercle avec la plaque collectrice et la tubulure.

Un procédé d'assemblage d'un échangeur de chaleur conforme à l'invention, comportant une seule tubulure 7 de raccordement, est à présent décrit.

Le procédé comprend essentiellement les étapes consistant à conformer la tubulure 7 de raccordement à l'échangeur avec des bords externes 23 complémentaires de la surface externe du couvercle 11 au niveau de l'orifice 17 de passage du fluide dans le collecteur, positionner la tubulure 7 sur l'orifice 17 de passage de fluide du couvercle, puis rabattre les ailes latérales 9c de la plaque collectrice sur le couvercle pour fermer le couvercle sur la plaque collectrice et sertir la tubulure au couvercle en permettant de la sorte un pré assemblage de l'échangeur avant son assemblage. Ce dernier est réalisé, par exemple, par passage dans un four de brasage.

## Revendications

1. Echangeur de chaleur (1) comprenant au moins une tubulure (7) de passage de fluide F et au moins un collecteur (5) muni d'un couvercle (11) fermant, après assemblage, une ouverture longitudinale (10) d'une plaque collectrice (9) coopérant avec ledit couvercle (11) pour former le collecteur, ladite tubulure (7) étant destinée à former un élément de raccordement de l'échangeur et comportant une extrémité en partie sertie entre ledit couvercle (11) et ladite plaque collectrice (9) au niveau d'un orifice (17) de passage dudit fluide F dans le collecteur, dans lequel ladite plaque collectrice (9) est configurée pour réaliser le sertissage de bords externes (23) de ladite tubulure (7) sur ledit couvercle en la mettant en communication de fluide avec ledit orifice de passage (17), dans lequel ladite tubulure (7) comprend une collerette (21) conformée pour s'appliquer face contre face, au moins par une partie de la collerette, sur le couvercle (11), ladite collerette comprenant lesdits bords externes (23), dans lequel ladite collerette (21) est rapportée à une pièce tubulaire (18) formant un corps principal de la tubulure (7).

2. Echangeur de chaleur (1) selon la revendication 1, dans lequel ladite tubulure (7) est pourvue à l'autre de ses extrémités d'un élément de raccord (22) pour le raccordement de l'échangeur.

3. Echangeur de chaleur (1) selon la revendication précédente, dans lequel ledit sertissage de la tubulure (7) sur le couvercle est réalisé par application de bords parallèles (9d) délimitant l'ouverture longitudinale de ladite plaque collectrice (9) contre lesdits bords externes (23) de la tubulure.

4. Echangeur de chaleur (1) selon la revendication 3, dans lequel lesdits bords externes (23) sont issus d'une déformation de l'extrémité de la tubulure.

5. Echangeur de chaleur (1) selon la revendication précédente, dans lequel ladite collerette (21) est pliée.

6. Echangeur de chaleur (1) selon la revendication 1, dans lequel ladite collerette (21) comprend une simple ou une double épaisseur.

7. Echangeur de chaleur (1) selon l'une quelconque des revendications 3 à 6, dans lequel l'épaisseur desdits bords externes (23) correspond sensiblement à celle du couvercle (11), par exemple comprise entre 0,8 et 1,2 mm.

8. Echangeur de chaleur (1) selon l'une quelconque des revendications précédentes, dans lequel ledit couvercle (11) comporte un collet (19) délimitant ledit orifice de passage (17), destiné à être reçu par ladite extrémité de la tubulure (7).

9. Echangeur de chaleur (1) selon l'une quelconque des revendications précédentes, dans lequel ladite extrémité de la tubulure (7) est évasée.

10. Procédé d'assemblage d'un échangeur de chaleur (1) selon l'une quelconque des revendications précédentes comprenant les étapes consistant à :
conformer la tubulure (7) de raccordement de façon complémentaire à la surface externe du couvercle (11) au niveau de l'orifice (17) de passage du fluide F dans le collecteur (5),
positionner la tubulure (7) sur l'orifice (17) de passage de fluide du couvercle, puis
rabattre les ailes latérales (9c) de la plaque collectrice (9) sur le couvercle (11) pour fermer le couvercle (11) sur la plaque collectrice (9) et sertir la tubulure (7) au couvercle (11), en permettant de la sorte un pré assemblage de l'échangeur avant son assemblage.

## Patentansprüche

1. Wärmetauscher (1), umfassend mindestens ein Durchgangsrohr (7) für ein Fluid F und mindestens einen Kollektor (5), der mit einem Deckel (11) versehen ist, der nach der Montage eine Längsöffnung (10) einer Kollektorplatte (9) verschließt, die mit dem Deckel (11) zusammenwirkt, um den Kollektor zu bilden, wobei das Rohr (7) dazu bestimmt ist, ein Anschlusselement des Wärmetauschers zu bilden, und umfassend ein Ende, das teilweise zwischen den Deckel (11) und die Kollektorplatte (9) im Bereich einer Durchgangsöffnung (17) für das Fluid F im Kollektor eingepasst ist, wobei die Kollektorplatte (9) eingerichtet ist, um das Einpassen von Außenrändern (23) des Rohrs (7) auf dem Deckel durchzuführen, wobei es mit der Durchgangsöffnung (17) in Fluidverbindung gehalten wird, wobei das Rohr (7) einen Kragen (21) umfasst, der ausgebildet ist, um sich Fläche an Fläche zumindest mit einem Teil des Kragens an den Deckel (11) anzulegen, wobei der Kragen die Außenränder (23) umfasst, wobei der Kragen (21) auf ein rohrförmiges Stück (18), das einen Hauptkörper des Rohrs (7) bildet, aufgesetzt ist.

2. Wärmetauscher (1) nach Anspruch 1, bei dem das Rohr (7) am anderen seiner Enden mit einem Anschlusselement (22) für den Anschluss des Wärmetauschers versehen ist.

3. Wärmetauscher (1) nach dem vorhergehenden Anspruch, bei dem das Einpassen des Rohrs (7) auf den Deckel durch Anlegen von parallelen Rändern (9d), die die Längsöffnung der Kollektorplatte (9) begrenzen, an die Außenränder (23) des Rohrs erfolgt.

4. Wärmetauscher (1) nach Anspruch 3, bei dem die Außenränder (23) aus einer Verformung des Endes des Rohrs hervorgehen.

5. Wärmetauscher (1) nach dem vorhergehenden Anspruch, bei dem der Kragen (21) gefalzt ist.

6. Wärmetauscher (1) nach Anspruch 1, bei dem der Kragen (21) eine einfache oder eine doppelte Dicke umfasst.

7. Wärmetauscher (1) nach einem der Ansprüche 3 bis 6, bei dem die Dicke der Außenränder (23) im Wesentlichen jener des Deckels (11) entspricht, die beispielsweise zwischen 0,8 und 1,2 mm beträgt.

8. Wärmetauscher (1) nach einem der vorhergehenden Ansprüche, bei dem der Deckel (11) eine Manschette (19) umfasst, die die Durchgangsöffnung (17) begrenzt, die dazu bestimmt ist, von dem Ende des Rohrs (7) aufgenommen zu werden.

9. Wärmetauscher (1) nach einem der vorhergehenden Ansprüche, bei dem das Ende des Rohrs (7) erweitert ist.

10. Verfahren zur Montage eines Wärmetauschers (1) nach einem der vorhergehenden Ansprüche, umfassend die folgenden Schritte, darin bestehend:
das Anschlussrohr (7) komplementär zur Außenfläche des Deckels (11) im Bereich der Durchgangsöffnung (17) für das Fluid F im Kollektor (5) auszubilden,
das Rohr (7) auf der Fluiddurchgangsöffnung (17) des Deckels zu positionieren, dann
die seitlichen Flügel (9c) der Kollektorplatte (9) auf den Deckel (11) umzulegen, um den Deckel (11) auf der Kollektorplatte (9) zu bilden, und das Rohr (7) am Deckel (11) einzupassen, wobei auf diese Weise eine Vormontage des Wärmetauschers vor seiner Montage ermöglicht wird.

## Claims

1. Heat exchanger (1) comprising at least one pipe (7) for the passage of fluid F and at least one manifold (5) equipped with a cover (11) which, after assembly, closes a longitudinal opening (10) in a collector plate (9) collaborating with the said cover (11) to form the manifold, the said pipe (7) being intended to form an exchanger connecting element and comprising one end partially crimped between the said cover (11) and the said collecting plate (9) at an orifice (17) for the passage of the said fluid F into the manifold, in which the said collecting plate (9) is configured to crimp external edges (23) of the said pipe (7) onto the said cover, placing it in fluidic communication with the said passage orifice (17), in which the said pipe (7) comprises a flange (21) configured to be pressed, face-to-face, at least via part of the flange, against the cover (11), the said flange comprising the said external edges (23), in which the said flange (21) is attached to a tubular component (18) that forms a main body of the said pipe (7).

2. Heat exchanger (1) according to Claim 1, in which the said pipe (7) is provided at the other of its ends with a connecting element (22) for the connecting of the exchanger.

3. Heat exchanger (1) according to the preceding claim, in which the said crimping of the pipe (7) to the cover is performed by pressing parallel edges (9d) that delimit the longitudinal opening in the said collecting plate (9) against the said external edges (23) of the pipe.

4. Heat exchanger (1) according to Claim 3, in which the said external edges (23) derive from a deforming of the end of the pipe.

5. Heat exchanger (1) according to the preceding claim, in which the said flange (21) is bent.

6. Heat exchanger (1) according to Claim 1, in which the said flange (21) comprises a single or a double thickness.

7. Heat exchanger (1) according to any one of Claims 3 to 6, in which the thickness of the said external edges (23) corresponds more or less to that of the cover (11), being for example comprised between 0.8 and 1.2 mm.

8. Heat exchanger (1) according to any one of the preceding claims, in which the said cover (11) comprises a collar (19) delimiting the said passage orifice (17) and intended to be housed by the said end of the pipe (7).

9. Heat exchanger (1) according to any one of the preceding claims, in which the said end of the pipe (7) is flared.

10. Method of assembling a heat exchanger (1) according to any one of the preceding claims, comprising the steps involving:
shaping the connecting pipe (7) to complement the external surface of the cover (11) in the region of the orifice (17) for the passage of the fluid F in the manifold (5),
positioning the pipe (7) on the fluid passage orifice (17) of the cover, and then
bending the lateral flanges (9c) of the collecting plate (9) onto the cover (11) to close the cover (11) onto the collecting plate (9) and crimp the pipe (7) to the cover (11), thereby allowing the exchanger to be preassembled before it is assembled.
